(19) Europäisches Patentamt
European Patent Office
Office européen des brevets

(11) **EP 1 865 619 A1**

(12) **EUROPEAN PATENT APPLICATION**
published in accordance with Art. 158(3) EPC

(43) Date of publication:
**12.12.2007 Bulletin 2007/50**

(51) Int Cl.:
*H04B 7/06* (2006.01)  *H04B 1/707* (2006.01)
*H04B 7/04* (2006.01)  *H04J 15/00* (2006.01)

(21) Application number: **06732345.1**

(22) Date of filing: **26.04.2006**

(86) International application number:
**PCT/JP2006/308689**

(87) International publication number:
**WO 2006/118123 (09.11.2006 Gazette 2006/45)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.04.2005 JP 2005132059**

(71) Applicant: **MATSUSHITA ELECTRIC INDUSTRIAL CO., LTD.**
**Osaka 571-8501 (JP)**

(72) Inventors:
• **YUDA, Yasuaki,**
**Matsushita Electric Industrial Co., Ltd.**
**2-1-61, Shiromi, Chuo-ku**
**Osaka 540-6207 (JP)**

• **IMAI, Tomohiro**
**Matsushita Electric Industrial Co., Ltd.**
**2-1-61, Shiromi, Chuo-ku**
**Osaka 540-6207 (JP)**
• **HOSHINO, Masayuki**
**Matsushita Electric Industrial Co., Ltd.**
**2-1-61, Shiromi, Chuo-ku**
**Osaka 540-6207 (JP)**
• **KIMURA, Ryohei**
**Matsushita Electric Industrial Co., Ltd.**
**2-1-61, Shiromi, Chuo-ku**
**Osaka 540-6207 (JP)**

(74) Representative: **Grünecker, Kinkeldey, Stockmair & Schwanhäusser Anwaltssozietät Maximilianstrasse 58 80538 München (DE)**

(54) **WIRELESS COMMUNICATION APPARATUS, AND FEEDBACK INFORMATION GENERATING METHOD**

(57)    A wireless communication apparatus that allows channel information to be reproduced with high precision at a transmitting end without increasing feedback information amount. In this apparatus, a channel estimating part (103) uses received pilot signals to perform channel estimation for each channel. A correlation detecting part (104) uses the result of the channel estimation to obtain correlation values between the channels, thereby detecting correlation values of all channels. An amplitude/phase ratio determining part (105) determines, based on the correlation values, the quantization bit ratio of the amplitude and phase of channel information to be used when those amplitude and phase are quantized. A feedback information generating part (106) quantizes the channel information in accordance with the determined ratio of the amplitude and phase.

FIG. 1

**Description**

Technical Field

The present invention relates to a wireless communication apparatus and feedback information generation method used in a wireless communication system using a MIMO (Multiple Input Multiple Output) technique which carries out wireless communication by receiving at a plurality of antennas a radio signal transmitted through a plurality of antennas.

Background Art

In recent years, transmission schemes for realizing high-speed transmission of a great amount of data is studied, and attention is directed to the MIMO transmission technique using a plurality of antennas. MIMO transmission makes it possible to increase transmission throughput by using a plurality of antennas at the same time and at the same frequency, and transmitting signals through a plurality of different channels. This is referred to as "space division multiplexing" ("SDM").

The SDM schemes include an antenna space SDM for transmitting different signal streams through antennas and a beam space SDM for transmitting different signal streams using a plurality of beams.

When the transmission beam adaptively controlled according to the channel condition is formed, with beam space SDM, it is possible to improve transmission throughput of the antenna space SDM. As beam space SDM, for example, a technique disclosed in Patent Document 1 is known.

However, when the transmission beam adaptively controlled according to the channel condition is formed, with beam space SDM, it is necessary to learn a channel condition or a transmission weight used upon transmission on the transmitting side. With TDD, the same frequency band is used in uplink and downlink and the reciprocity of the channel is formed in uplink and downlink when the time difference between uplink and downlink is small, so that it is possible to use channel information of the opposite channel.

On the other hand, with FDD, frequency bands are different in uplink and downlink, and the reciprocity of the channel is not formed in uplink and downlink, and, therefore, it is not possible to use channel information of the opposite channel. For this reason, it is necessary to feed back channel information obtained by channel estimation on the receiving side to the transmitting side. In this way, a technique of feeding back channel information and reproducing channel information on the transmitting side is known such as one, for example, disclosed in Non-Patent Document 1.

The technique disclosed in Non-Patent Document 1 generates feedback information by quantizing channel information. To be more specific, by quantizing one complex number constituting a transmission weight into three amplitude bit information and five phase bit information, one complex number is represented by eight bits. Further, when the number of elements of the transmission weight is N, the entire transmission weight is fed back as 3N+5 (N-1)-bit information by setting the phase of one complex number as a reference phase. On the transmitting side, upon reproduction of channel information from feedback information, it is possible to form a transmission beam suitable for the channel condition and improve transmission throughput by accurately reproducing channel information.

Patent Document 1: Japanese Patent Application Laid-Open No.2001-237751

Non-Patent Document 1: 3GPP TR25.869 verl.2.1

Disclosure of Invention

Problems to be Solved by the Invention

However, to accurately reproduce channel information on the transmitting side, the technique disclosed in above Non-Patent Document 1 needs to quantize channel information in high resolution, and, in this case, increases the amount of feedback information. For example, when one complex number of a transmission weight is quantized into four amplitude bit information and six phase bit information, the amount of feedback information increases by two bits and becomes ten bits. In this way, quantization in high resolution increases the amount of feedback information and suppresses the communication channel.

It is an object of the present invention to provide a wireless communication apparatus and feedback information generation method that make it possible to accurately reproduce channel information on the transmitting side without increasing the amount of feedback information.

Means for Solving the Problem

The wireless communication apparatus of the present invention employs a configuration including: a correlation calculating section that calculates a degree of correlation between a plurality of channels; a feedback information generating section that quantizes a phase and amplitude indicating channel information and generates feedback information including the quantized phase and amplitude; and a determining section that determines rules in quantization in the feedback information generating section based on the degree of correlation between the channels, and specifying the determined rules to the feedback information generating section.

The feedback information generation method of the present invention includes: a correlation value calculating step of calculating a degree of correlation between a plurality of channels; a determining step of determining rules in quantization of phase and amplitude indicating channel information based on the degree of correlation between the channels; and a feedback information generating step of quantizing the phase and the amplitude indicating the channel information based on the rules in quantization determined in the determining step, and generating feedback information including the quantized phase and amplitude.

The wireless communication system of the present invention that includes a transmitting apparatus and a receiving apparatus employs a configuration in which the resin apparatus includes: a correlation calculating section that calculates a degree of correlation between a plurality of channels; a feeding back section that quantizes phase and amplitude indicating channel information and transmits feedback information including the quantized phase and amplitude; and a determining section determines rules in quantization in the feeding back section based on the degree of correlation between the channels and specifies the determined rules to the feeding back section, and the transmitting apparatus includes: a reproducing section that reproduces the channel information from the feedback information transmitted from the receiving apparatus; and a beam forming section that forms a beam based on the reproduced channel information.

Advantageous Effect of the Invention

The present invention makes it possible to accurately reproduce channel information on the transmitting side without increasing the amount of feedback information.

Brief Description of Drawings

FIG.1 is a block diagram showing a configuration of the receiving apparatus according to Embodiment 1 of the present invention;
FIG.2 is a block diagram showing a configuration of the transmitting apparatus according to Embodiment 1 of the present invention;
FIG.3 is a flowchart showing feedback processing of the receiving apparatus shown in FIG.1;
FIG.4 shows that channel information is quantized into three amplitude bits and five phase bits;
FIG.5 shows feedback information generated from channel information shown in FIG.4;
FIG.6 shows that channel information is quantized to four amplitude bits and four phase bits;
FIG.7 shows feedback information generated from channel information shown in FIG.6;
FIG.8 shows the relationship between a channel correlation value and the SIR when transmitting antennas are two and receiving antennas are two;
FIG.9 shows the relationship between a channel correlation value and the SIR when transmitting antennas are four and receiving antennas are four;
FIG. 10 shows a table showing correspondences between channel correlation values, ratios of amplitude and phase and the number of transmitting antennas and receiving antennas;
FIG.11 is a block diagram showing a configuration of the receiving apparatus according to Embodiment 2 of the present invention;
FIG.12 illustrates a quantization method of channel information; and
FIG.13 shows feedback information generated from differential information shown in FIG. 12.

Best Mode for Carrying Out the Invention

Embodiments of the present invention will be described with reference to the accompanying drawings. However, in embodiments, configurations having the same functions will be allotted the same reference numerals and will not be described.

(Embodiment 1)

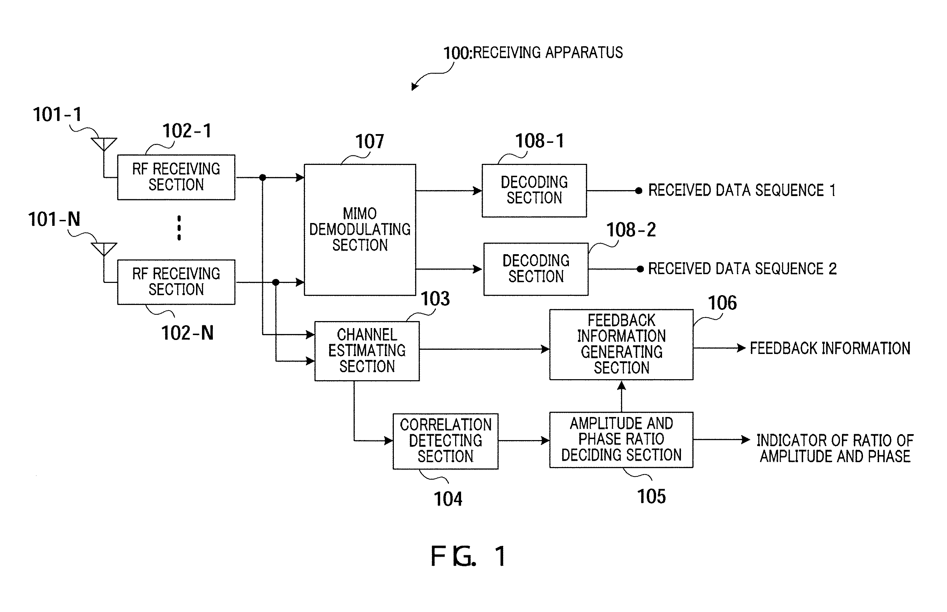

FIG.1 is a block diagram showing a configuration of receiving apparatus 100 according to Embodiment 1 of the present invention. In this figure, RF receiving sections 102-1 to 102-N convert carrier signals in a radio frequency band received through antennas 101-1 to 101-N from a transmitting apparatus into baseband signals, and outputs converted baseband signals to channel estimating section 103 and MIMO demodulating section 107.

Channel estimating section 103 demodulates pilot signals from the baseband signals outputted from RF receiving sections 102-1 to 102-N and carries out channel estimation using the demodulated pilot signals. Here, a "channel" refers to a propagation path for a signal which is transmitted from a transmitting antenna and is received at a receiving antenna. In this channel, the amplitude and the phase of a signal varies due to the influence of multipath fading. "Channel estimation" refers to the measurement of this amplitude and phase variation. Further, in a plurality of channels formed between a plurality of transmitting antennas and a plurality of receiving antennas, signals vary independently and so channel estimation is performed per channel. The channel estimation results are outputted to correlation detecting section 104 and feedback information generating section 106.

Correlation detecting section 104 calculates inter-channel correlation values with respect to all combinations of two channels using the channel estimation results outputted from channel estimating section 103, and detects an overall channel correlation value using the calculated inter-channel correlation values. The overall channel correlation value may be calculated by averaging inter-channel correlation values. The detected overall channel correlation value is outputted to amplitude and phase ratio deciding section 105.

Amplitude and phase ratio deciding section 105 decides a ratio of quantized bits of the amplitude and quantized bits of the phase in feedback information upon quantization of channel information as feedback information in feedback information generating section 106 described later, based on the correlation value outputted from correlation detecting section 104, outputs the decided ratio of the amplitude and the phase to feedback information generating section 106 and feeds back an indicator indicating the ratio of amplitude and phase to a transmitting apparatus.

Feedback information generating section 106 quantizes the channel estimation result, that is, channel information, outputted from channel estimating section 103 according to the ratio of the amplitude and the phase outputted from amplitude and phase ratio deciding section 105, and generates feedback information including the quantized amplitude and phase. Generated feedback information is fed back to the transmitting apparatus.

MIMO demodulating section 107 MIMO demodulates the baseband signals outputted from RF receiving sections 102-1 to 102-N, and outputs the demodulation results to decoding sections 108-1 and 108-2. Decoding sections 108-1 and 108-2 perform, for example, error correction decoding processing and error detection processing on the demodulation results outputted from MIMO demodulating section 107, and extracts the received data sequence.

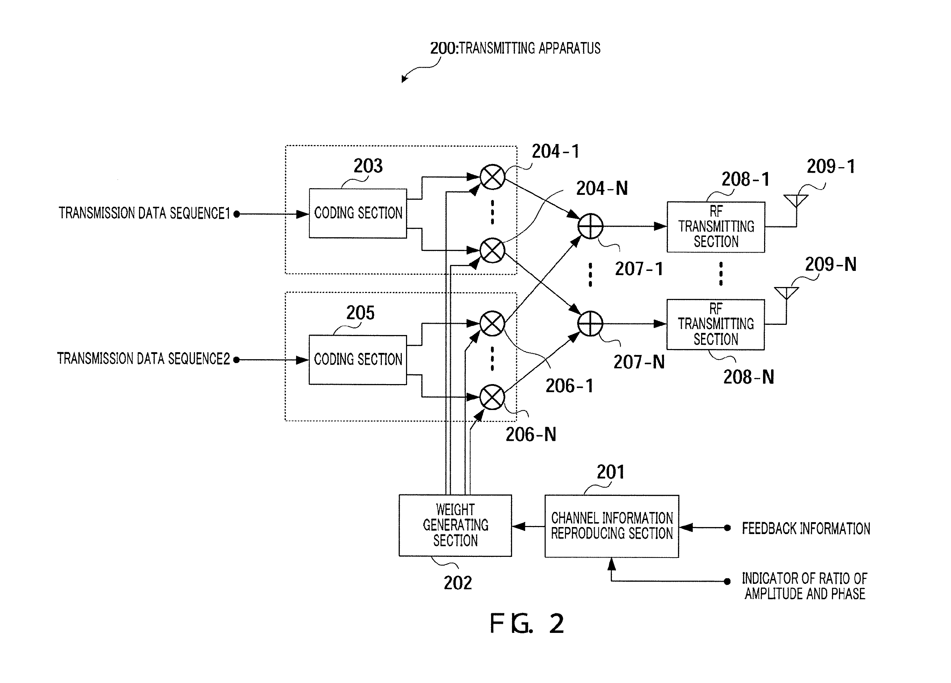

FIG.2 is a block diagram showing a configuration of transmitting apparatus 200 according to Embodiment 1 of the present invention. In this figure, channel information reproducing section 201 obtains the feedback information and the indicator indicating the ratio fed back from receiving apparatus 100, and reproduces channel information before quantization from feedback information, based on the indicator. Reproduced channel information is outputted to weight generating section 202.

Weight generating section 202 generates transmission weights for weighting the streams based on channel information outputted from channel information reproducing section 201, and outputs the generated transmission weights to multipliers 204-1 to 204-N.

By encoding transmission sequence 1 in coding section 203, a plurality of streams are formed and outputted to corresponding multipliers 204-1 to 204-N. Similarly, transmission sequence 2 is encoded in coding section 205 and a plurality of streams are outputted to corresponding multipliers 206-1 to 206-N.

Multipliers 204-1 to 204-N and 206-1 to 206-N multiply the streams by the transmission weights outputted from weight generating section 202, and performs weighting on the streams. The streams after weighting are added to the corresponding streams in adders 207-1 to 207-N, up-converted to carrier signals in a radio frequency band in RF transmitting sections 208-1 to 208-N, and transmitted through antennas 209-1 to 209-N.

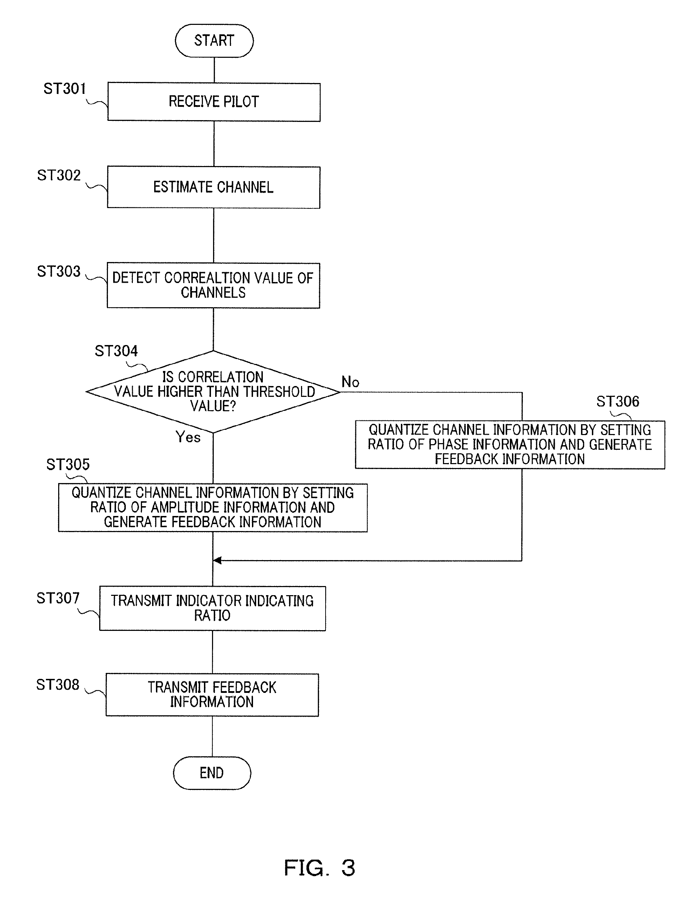

Feedback processing of receiving apparatus 100 having the above configuration will be described with reference to FIG.3. FIG.3 assumes MIMO transmission in downlink and assumes that a receiving apparatus that generates feedback information is a mobile station apparatus. In this figure, in step (hereinafter, abbreviated as "ST") 301, antennas 101-1 to 101-N of the mobile station apparatus receive pilot signals transmitted in downlink. The pilot signals transmitted through a plurality of antennas are transmitted using time division multiplexing, frequency division multiplexing or code division multiplexing.

In ST302, channel estimating section 103 performs channel estimation on all combinations of transmitting antennas and receiving antennas, that is, channels. For example, when the number of transmitting antennas is M and the number of receiving antennas is N, the channel estimation results give channel matrix H formed with N rows and M columns expressed by following equation 1.

[1]

$$H = \begin{bmatrix} h_{11} & \cdots & h_{1M} \\ & \ddots & \\ \vdots & h_{nm} & \vdots \\ h_{N1} & \cdots & h_{NM} \end{bmatrix} \quad \dots \text{(Equation 1)}$$

Here, $h_{nm}$ is the element of the n-th row and the m-th column in matrix H, indicates the fading variation influencing the channel between the m-th transmitting antenna and the n-th receiving antenna and is generally expressed by a complex number.

In ST 303, by using the channel estimation results obtained in ST 302, correlation detecting section 104 detects an overall channel correlation value. Inter-channel correlation value $\rho_{ij,pq}$ is calculated using, for example, equation 2.

[2]

$$\rho_{ij,pq} = \frac{E\left[ h_{ij}^* h_{pq} \right]}{\sqrt{E\left[ \left| h_{ij} \right|^2 \right]} \sqrt{E\left[ \left| h_{pq} \right|^2 \right]}} \quad \dots \text{(Equation 2)}$$

$h_{ij}$ indicates the (i, j) element in channel matrix H, and $h_{pq}$ indicates the (p, q) element in channel matrix H. E [h] is the expected value of h. By averaging the inter-channel correlation values, the overall channel correlation value is detected.

In ST 304, amplitude and phase ratio deciding section 105 performs a threshold decision on the overall channel correlation value detected in ST 303 for the predetermined threshold value. When this threshold decision result is greater than the threshold value, the ratio of the amplitude is increased, and the flow proceeds to ST 305. On the other hand, when this threshold decision result is equal to or less than the threshold value, the ratio of the phase is increased, and the flow proceeds to ST 306. Further, the threshold value takes different values depending on the number of transmitting antennas, the number of receiving antennas and the number of quantized bits. For this reason, amplitude and phase ratio deciding section 105 makes it possible to change the threshold value by preparing a table indicating the correspondence of the number of transmitting antennas and receiving antennas, the number of quantized bits and the threshold value.

In ST 305, feedback information generating section 106 quantizes channel information according to the ratio of the amplitude and the phase decided in ST 304 and generates feedback information in which the amplitude ratio is increased. Further, in ST 306, feedback information generating section 106 quantizes channel information according to the ratio of the amplitude and the phase decided in ST 304, and generates feedback information in which the phase ratio is increased.

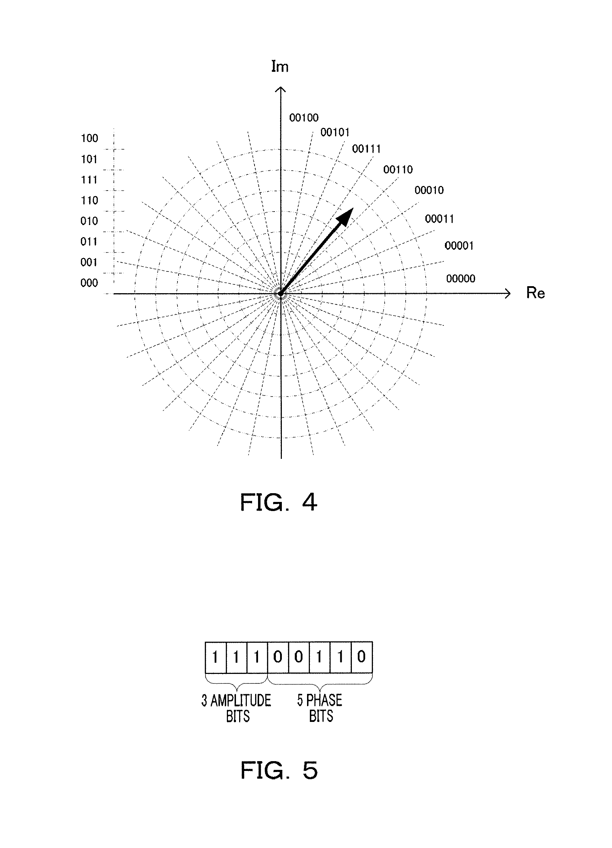

Here, the generation method of feedback information, that is, the quantization method of channel information will be described. First, a case will be described with reference to FIG.4 where channel information between a pair of a transmitting antenna and a receiving antenna is quantized into three amplitude bits and five phase bits, and eight-bit feedback information is generated. FIG.4 shows channel information with a solid line arrow, and the amplitude can be represented as "111" and the phase as "00110" after quantization of this channel information. That is, FIG. 5 shows feedback information generated from channel information shown in FIG.4.

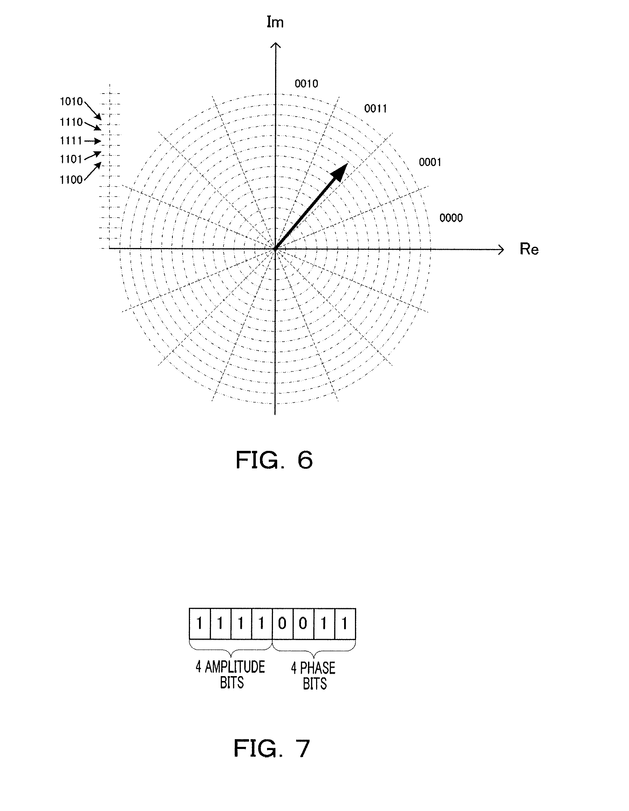

Further, a case will be described with reference to FIG.6 where feedback information is kept eight bits and is quantized into four amplitude bits and four phase bits. FIG.6 indicates channel information with a solid line arrow, and the amplitude can be represented as "1111" and the phase as "0011" after quantization of this channel information. That is, FIG.7 shows feedback information generated from channel information shown in FIG.6.

Referring back to FIG.3, in ST 307, amplitude and phase ratio deciding section 105 transmits an indicator indicating the ratio of the amplitude and the phase decided in ST 304 to a base station apparatus, which is transmitting apparatus 200. As a result of this, the base station apparatus can obtain the indicator and reproduce the feedback information using the ratio of the amplitude and the phase used in quantization in the mobile station apparatus. Moreover, by sharing in advance correspondences between the ratio of the amplitude and the phase and the indicator between the mobile station apparatus and the base station apparatus, the number of the amplitude and the phase bits needs not to be reported by an indicator. The transmission timing of an indicator is not limited to the timing indicated in ST 307 of FIG.3, and it is equally possible to monitor the threshold decision result of the correlation value and transmit an indicator when the threshold decision result changes, or transmit an indicator at regular intervals and keep transmitting feedback information without changing the ratio of the amplitude and the phase during the intervals where the indicator is not transmitted.

In ST 308, feedback information generated in ST 305 or ST 306 is transmitted from feedback information generating section 106 to the base station apparatus, and feedback processing in the mobile station apparatus ends.

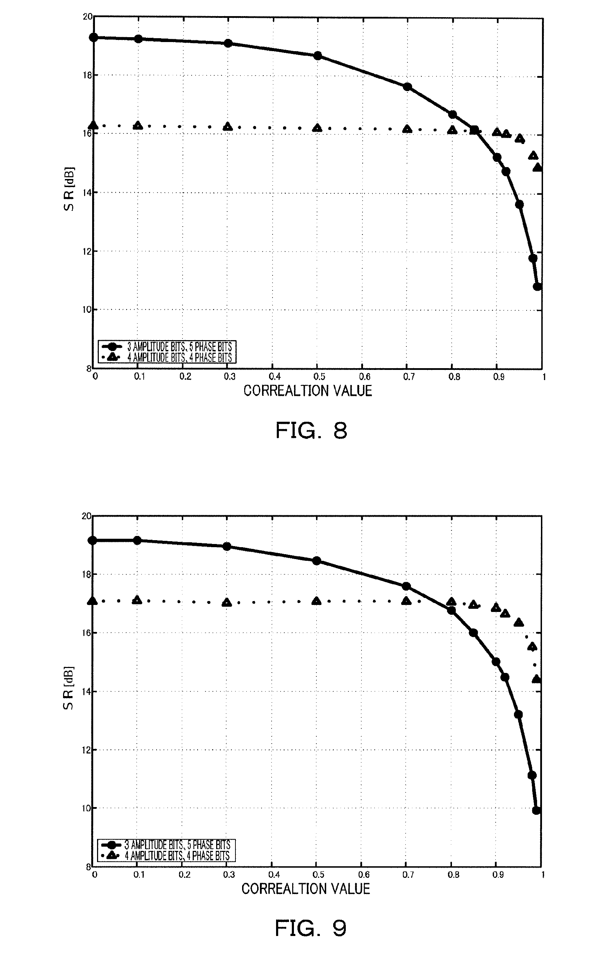

Next, when beam space SDM transmission is carried out based on feedback information quantized by the methods shown in FIG.4 and FIG.6, interference power generated due to quantization errors is evaluated. FIG.8 shows the relationship between channel correlation values and the signal to interference power ratio (SIR) when there are two transmitting antennas and two receiving antennas. FIG.9 shows a relationship between channel correlation values and SIRs when there are four transmitting antennas and four receiving antennas. Further, arithmetic calculation for calculating the relationships shown in FIG.8 and FIG.9 uses eigenvectors as transmission weights.

In FIG.8 and FIG.9, the solid line connecting circular symbols represents the method shown in FIG.4 of quantization into three amplitude bits and five phase bits (phase-focused quantization method), and the dotted line connecting triangular symbols represents the method shown in FIG.6 of quantization into four amplitude bits and four phase bits (amplitude-focused quantization method). In FIG. 8 and FIG. 9, the solid line and the dotted line intersect between correlation value 0.7 to 0.9, and, for correlation values lower than the correlation value of this intersection point, the phase-focused quantization method can suppress SIR deterioration more than the amplitude-focused quantization method. In contrast with this, for correlation values higher than the correlation value of this intersection point, the amplitude-focused quantization method can suppress SIR deterioration more than the phase-focused quantization method. That is, it is preferable to set the correlation value of this intersection point as the threshold value in amplitude and phase ratio deciding section 105. Further, the correlation value of this intersection point changes according to the number of antennas, and the threshold value needs to be changed according to the number of antennas.

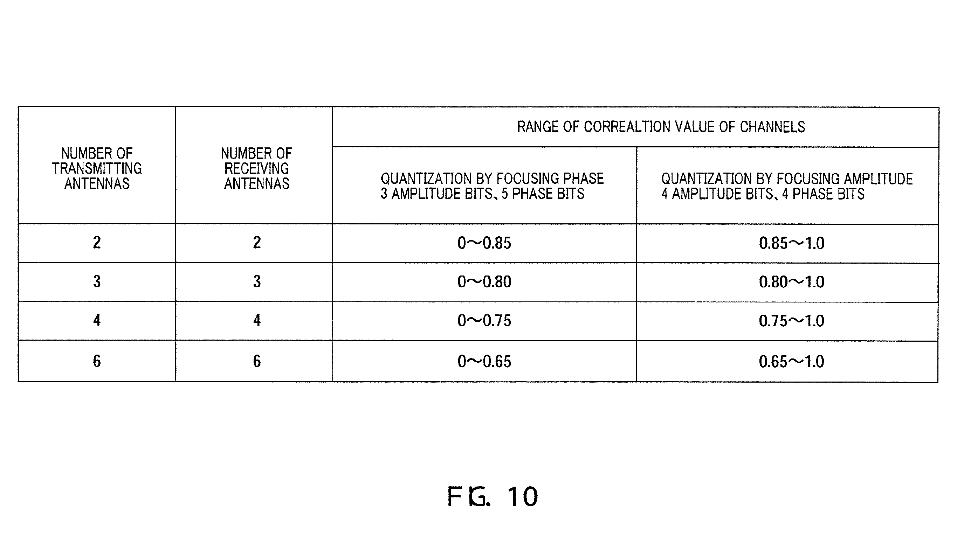

FIG.10 shows a table which indicates the relationship of channel correlation values, the ratio of the amplitude and the phase, and the number of transmitting antennas and receiving antennas based on such an analysis result. Amplitude and phase ratio deciding section 105 prepares a table such as shown in FIG.10 and selects from the table one of amplitude-focused quantization and phase-focused quantization based on the channel correlation value, the number of transmitting antennas and the number of receiving antennas.

By carrying out phase-focused quantization when the channel correlation is low and carrying out amplitude-focused quantization when the channel correlation is high, channel information can be accurately reproduced from feedback information fed back from transmitting apparatus 200, so that, when beam space SDM transmission is carried out, it is possible to reduce interference power generated due to quantization errors.

In this way, according to Embodiment 1, upon quantization of channel information, by carrying out one of amplitude-focused quantization and phase-focused quantization and generating feedback information based on the degree of channel correlation, the transmitting apparatus receiving feedback information can accurately reproduce channel information from feedback information.

Further, although a case has been described with this embodiment where whether to focus the amplitude or the phase in order to generate feedback information is decided based on a channel correlation value, the present invention is not limited to this and decision may be made based on any indicators indicating the degree of channel correlation. These indicators include, for example, the size of the determinant of the channel matrix, the singular value of the channel matrix and the correlation value of the received vectors.

Moreover, a case has been described with this embodiment where it is decided whether amplitude information or phase information is focused upon as feedback information by controlling the ratio of the number of amplitude bits and the number of phase bits, the present invention is not limited to this, and the focus may be managed by controlling the feedback periods of amplitude information and phase information. For example, assuming a wireless transmission system where one radio frame is constituted of a plurality of radio slots and one of amplitude information and phase information is transmitted as feedback information per radio slot, the number of slots storing amplitude information and the number of slots storing phase information may be controlled. As a result of this, similar to this embodiment, the ratio of amplitude information and phase information can be controlled.

Moreover, a case has been described with this embodiment where channel information is used as feedback information, the present invention is not limited to this and channel information may be transmission weight information calculated on the receiving side. Methods of calculating transmission weights on the receiving side include a method of calculating transmission weights from channel information using matrix operation or a method of selecting transmission weights which improve a reception condition from transmission weights tabulated in advance. In this case, similar to the present embodiment, by quantizing the calculated transmission weights and the tabulated transmission weights based on the degree of channel correlation, it is possible to accurately feed back the transmission weights within limited feedback information.

(Embodiment 2)

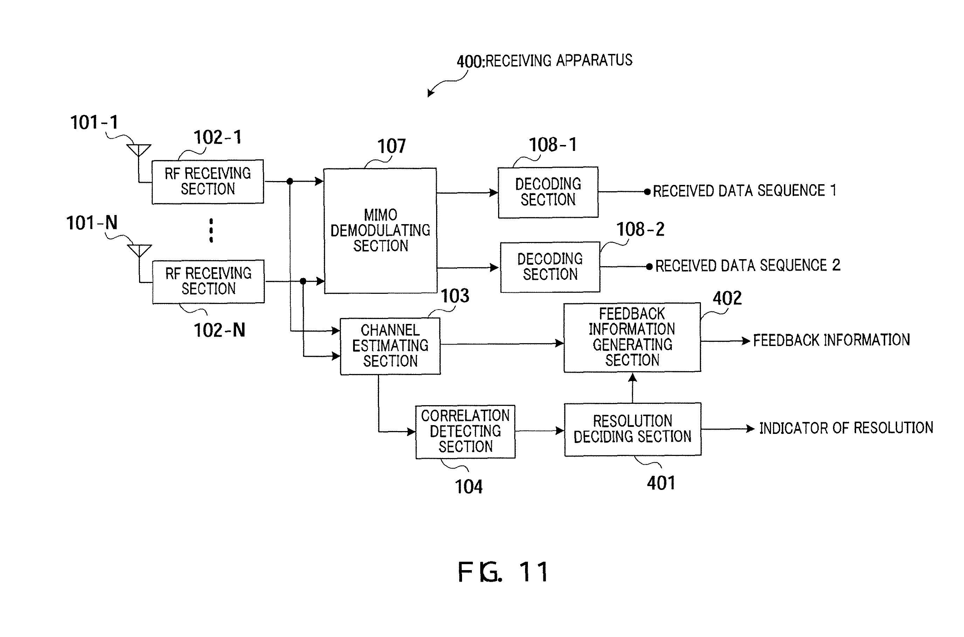

FIG.11 is a block diagram showing a configuration of receiving apparatus 400 according to Embodiment 2 of the present invention. FIG.11 differs from FIG.1 in changing amplitude and phase ratio deciding section 105 to resolution deciding section 401.

In FIG.11, resolution deciding section 401 decides the resolution for quantizing channel information in feedback information generating section 402 based on the correlation value outputted from correlation detecting section 104, outputs the decision result (resolution used in quantization) to feedback information generating section 402 and feeds back an indicator indicating the decision result to the transmitting apparatus.

Feedback information generating section 402 quantizes channel information outputted from channel estimating section 103 according to the detection result outputted from resolution deciding section 401, and generates feedback information included in the quantized amplitude and phase.

The transmitting apparatus according to Embodiment 2 of the present invention is the same as in FIG.2 and is described by employing FIG.2. Channel information reproducing section 201 acquires feedback information fed back from receiving apparatus 400 and the indicator indicating resolution, and reproduces channel information before quantization from feedback information based on the indicator.

The detection method of resolution in resolution deciding section 401 will be described. When the channel correlation is low, the complex values indicating channels are distributed all over the complex plane, so that resolution is preferable which equally divides the complex plane.

On the other hand, when the channel correlation is high, the amplitude and the phase of each element of the channel matrix have close values, so that it is possible to quantize differential information in high resolution compared to resolution which equally divides the complex plane.

In this way, resolution deciding section 401 decides to quantize differential information in high resolution when the channel correlation is high, and decides to quantize channel information in low resolution when the channel correlation is low.

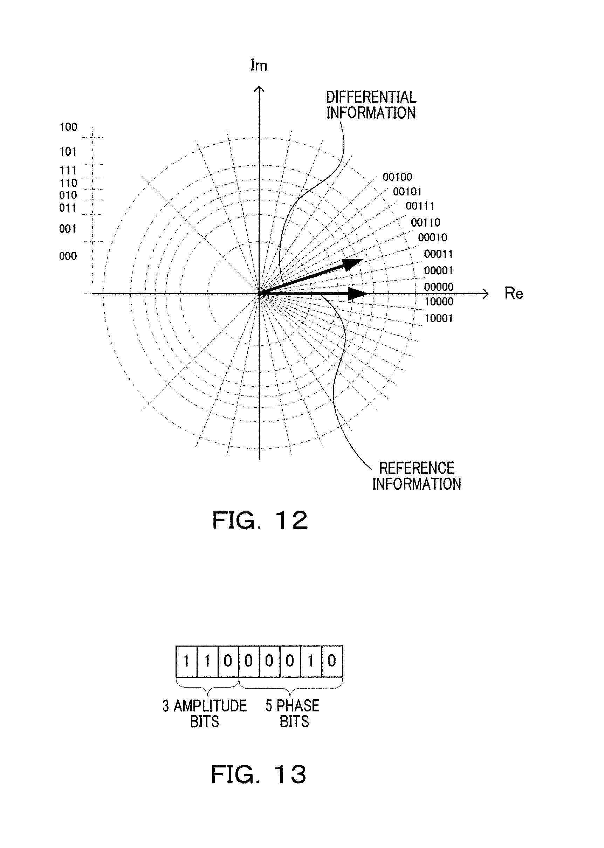

The quantization method of channel information in feedback information generating section 402 will be described with reference to FIG.12. When two channel information (complex numbers) are inputted to feedback information generating section 402, one of the two channel information is set as a reference (reference information) and differential information between the reference information and the other information is detected.

Assuming that the reference information and the differential information are as shown in FIG.12, in this case, when the amplitude and the phase are closer to the amplitude and the phase of the reference information, resolution is set higher, and, when the amplitude and the phase are further away from the amplitude and the phase of the reference information, resolution is set lower. The differential information is indicated by "110" for the amplitude and "00010" for the phase. That is, feedback information generated from the differential information shown in FIG.12 is as shown in FIG.13.

In this way, by quantizing the channel information having high correlation with the reference information in higher resolution when the differential information is closer to the reference information, the difference can be accurately represented from the reference information, so that it is possible to reduce quantization errors. Further, for the channel information having low correlation with the reference information is quantized in resolution which equally divides the complex plain.

Next, the method of quantizing the channel matrix by feedback information generating section 402 will be described. When a channel matrix is inputted to feedback information generating section 402, one of the elements of the channel matrix is extracted and the extracted element is quantized as a reference. Upon this quantization, quantization is carried out in resolution which equally divides the complex plane.

Next, another element in the channel matrix is extracted, and, when the channel correlation is high, differential information between another element and the reference element is quantized. Upon this quantization, the differential information is quantized in high resolution when the amplitude and the phase of the differential information are closer to the amplitude and the phase of the reference element and is quantized in low resolution when the amplitude and the phase of the differential information is further away from the amplitude and the phase of the reference element. Further, when the channel correlation is low, quantization is carried out in resolution which equally divides the complex plane. In this way, the elements in the channel matrix are quantized.

Here, although a method of obtaining differential information of the elements in the channel matrix, a method of obtaining differential information by grouping transmission vectors or received vectors in the channel matrix as one group may be possible.

According to Embodiment 2, by quantizing differential information in high resolution when the channel correlation is high, the difference of channel information having high correlation is accurately reproduced without increasing the amount of feedback information, so that it is possible to reduce quantization errors.

Although a case has been described with this embodiment where reference information and differential information are quantized into the same number of bits, the present invention is not limited to this, and the number of quantized bits of reference information and differential information may be controlled by making constant the total value of the number of quantized bits of reference information and the number of quantized bits of differential information. That is, by reducing the number of quantized bits of differential information and allocating the corresponding number of quantized bits of reference information accordingly, it is possible to improve the resolution of reference information, suppress quantization errors and improve the accuracy of feedback information.

Also, cases have been described with the above embodiments where the present invention is configured by hardware. However, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC", system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

In a first aspect of the present invention, a wireless communication apparatus employs a configuration including: a correlation calculating section that calculates a degree of correlation between a plurality of channels; a feedback information generating section that quantizes a phase and amplitude indicating channel information and generates feedback information including the quantized phase and amplitude; and a determining section that determines rules in quantization in the feedback information generating section based on the degree of correlation between the channels, and specifying the determined rules to the feedback information generating section.

According to this configuration, by carrying out quantization suitable for the channel condition, it is possible to accurately generate feedback information based on a limited amount of information.

In a second aspect of the present invention, the wireless communication apparatus employs a configuration in which, in the above configuration, the determining section determines a ratio of an amount of amplitude information and an amount of phase information used in the quantization according to a result of threshold decision of the degree of correlation between the channels and a predetermined threshold value.

In a third aspect of the present invention, the wireless communication apparatus employs a configuration in which, in the above configuration, the determining section increases the ratio of the amount of amplitude information when the degree of correlation between the channels is high and increases the ratio of the amount of phase information when the degree of correlation between the channels is low.

According to these configurations, it is possible to make suitable for the channel condition the ratio of the amount of amplitude information and the amount of phase information used in quantization and accurately generate feedback information based on a limited amount of information.

In a fourth aspect of the present invention, the wireless communication apparatus employs a configuration in which, in the above configuration, the determining section changes the threshold value according to a number of channels.

According to this configuration, the degree of correlation which switches the ratio of the amount of amplitude information and the amount of phase information used in quantization changes in response to the number of channels, so that it is possible to accurately generate feedback information by setting the threshold value in response to the number of channels.

In a fifth embodiment of the present invention, the wireless communication apparatus employs a configuration in which, in the above configuration, the determining section determines quantization resolution according to the degree of correlation between the channels.

In a sixth aspect of the present invention, the wireless communication apparatus employs a configuration in which, in the above configuration, the determining section sets quantization resolution higher according to an increase of the degree of correlation between the channels.

According to these configurations, the difference between channel information of high correlation based on a limited amount of information can be accurately represented, so that it is possible to reduce quantization errors.

In a seventh aspect of the present invention, the wireless communication mobile station apparatus employs a configuration comprising the wireless communication apparatus according to one of the above aspects.

According to this configuration, it is possible to accurately generate feedback information based on a limited amount of information by carrying out quantization suitable for the channel condition.

In an eighth aspect of the present invention, a feedback information generation method includes: a correlation value calculating step of calculating a degree of correlation between a plurality of channels; a determining step of determining rules in quantization of phase and amplitude indicating channel information based on the degree of correlation between the channels; and a feedback information generating step of quantizing the phase and the amplitude indicating the channel information based on the rules in quantization determined in the determining step, and generating feedback information including the quantized phase and amplitude.

According to this method, it is possible to accurately generate feedback information based on a limited amount of information by carrying out quantization suitable for the channel condition.

In a ninth aspect of the present invention, a wireless communication system that includes a transmitting apparatus and a receiving apparatus employs a configuration in which the resin apparatus includes: a correlation calculating section that calculates a degree of correlation between a plurality of channels; a feeding back section that quantizes phase and amplitude indicating channel information and transmits feedback information including the quantized phase and amplitude; and a determining section determines rules in quantization in the feeding back section based on the degree of correlation between the channels and specifies the determined rules to the feeding back section, and the transmitting apparatus includes: a reproducing section that reproduces the channel information from the feedback information transmitted from the receiving apparatus; and a beam forming section that forms a beam based on the reproduced channel information.

According to this configuration, by carrying out quantization suitable for the channel condition, feedback information can be accurately generated based on a limited amount of information, so that it is possible at the transmitting apparatus to accurately reproduce channel information.

The present application is based on Japanese patent application No.2005-132059, filed on April 28, 2005, the entire content of which is expressly incorporated by reference herein.

Industrial Applicability

The wireless communication apparatus and feedback information generation method according to the present invention can accurately reproduce channel information on the transmitting side without increasing the amount of feedback information, and is useful for, for example, a MIMO receiving apparatus.

**Claims**

1. A wireless communication apparatus comprising:

   a correlation calculating section that calculates a degree of correlation between a plurality of channels;
   a feedback information generating section that quantizes a phase and amplitude indicating channel information and generates feedback information including the quantized phase and amplitude; and
   a determining section that determines rules in quantization in the feedback information generating section based on the degree of correlation between the channels, and specifying the determined rules to the feedback information generating section.

2. The wireless communication apparatus according to claim 1, wherein the determining section determines a ratio of an amount of amplitude information and an amount of phase information used in the quantization according to a result of threshold decision of the degree of correlation between the channels and a predetermined threshold value.

3. The wireless communication apparatus according to claim 2, wherein the determining section increases the ratio of the amount of amplitude information when the degree of correlation between the channels is high and increases the ratio of the amount of phase information when the degree of correlation between the channels is low.

4. The wireless communication apparatus according to claim 2, wherein the determining section changes the threshold value according to a number of channels.

5. The wireless communication apparatus according to claim 1, wherein the determining section determines quantization resolution according to the degree of correlation between the channels.

6. The wireless communication apparatus according to claim 4, wherein the determining section sets quantization resolution higher according to an increase of the degree of correlation between the channels.

7. The wireless communication mobile station apparatus comprising the wireless communication apparatus according to claim 1.

**8.** A feedback information generation method comprising:

a correlation value calculating step of calculating a degree of correlation between a plurality of channels;
a determining step of determining rules in quantization of phase and amplitude indicating channel information based on the degree of correlation between the channels; and
a feedback information generating step of quantizing the phase and the amplitude indicating the channel information based on the rules in quantization determined in the determining step, and generating feedback information including the quantized phase and amplitude.

**9.** A wireless communication system that comprises a transmitting apparatus and a receiving apparatus wherein:

the resin apparatus comprises:

a correlation calculating section that calculates a degree of correlation between a plurality of channels;
a feeding back section that quantizes phase and amplitude indicating channel information and transmits feedback information including the quantized phase and amplitude; and
a determining section determines rules in quantization in the feeding back section based on the degree of correlation between the channels and specifies the determined rules to the feeding back section, and the transmitting apparatus comprises:

a reproducing section that reproduces the channel information from the feedback information transmitted from the receiving apparatus; and
a beam forming section that forms a beam based on the reproduced channel information.

**FG. 1**

100:RECEIVING APPARATUS

101-1, 102-1 RF RECEIVING SECTION
101-N, 102-N RF RECEIVING SECTION
107 MIMO DEMODULATING SECTION
108-1 DECODING SECTION → RECEIVED DATA SEQUENCE 1
108-2 DECODING SECTION → RECEIVED DATA SEQUENCE 2
103 CHANNEL ESTIMATING SECTION
104 CORRELATION DETECTING SECTION
105 AMPLITUDE AND PHASE RATIO DECIDING SECTION → INDICATOR OF RATIO OF AMPLITUDE AND PHASE
106 FEEDBACK INFORMATION GENERATING SECTION → FEEDBACK INFORMATION

FIG. 2

200:TRANSMITTING APPARATUS

TRANSMISSION DATA SEQUENCE1 — 203 CODING SECTION — 204-1, 204-N

TRANSMISSION DATA SEQUENCE2 — 205 CODING SECTION — 206-1, 206-N

207-1, 207-N

208-1 RF TRANSMITTING SECTION — 209-1

208-N RF TRANSMITTING SECTION — 209-N

201 CHANNEL INFORMATION REPRODUCING SECTION ← FEEDBACK INFORMATION

202 WEIGHT GENERATING SECTION

INDICATOR OF RATIO OF AMPLITUDE AND PHASE

EP 1 865 619 A1

START

ST301 — RECEIVE PILOT

ST302 — ESTIMATE CHANNEL

ST303 — DETECT CORREALTION VALUE OF CHANNELS

ST304 — IS CORRELATION VALUE HIGHER THAN THRESHOLD VALUE?

No

ST306 — QUANTIZE CHANNEL INFORMATION BY SETTING RATIO OF PHASE INFORMATION AND GENERATE FEEDBACK INFORMATION

Yes

ST305 — QUANTIZE CHANNEL INFORMATION BY SETTING RATIO OF AMPLITUDE INFORMATION AND GENERATE FEEDBACK INFORMATION

ST307 — TRANSMIT INDICATOR INDICATING RATIO

ST308 — TRANSMIT FEEDBACK INFORMATION

END

FIG. 3

FIG. 4

3 AMPLITUDE BITS    5 PHASE BITS

FIG. 5

1010
1110
1111
1101
1100

Im

0010

0011

0001

0000

Re

FIG. 6

| 1 | 1 | 1 | 1 | 0 | 0 | 1 | 1 |
|---|---|---|---|---|---|---|---|

4 AMPLITUDE BITS     4 PHASE BITS

FIG. 7

FIG. 8

FIG. 9

| NUMBER OF TRANSMITTING ANTENNAS | NUMBER OF RECEIVING ANTENNAS | RANGE OF CORREALTION VALUE OF CHANNELS | |
|---|---|---|---|
| | | QUANTIZATION BY FOCUSING PHASE 3 AMPLITUDE BITS、5 PHASE BITS | QUANTIZATION BY FOCUSING AMPLITUDE 4 AMPLITUDE BITS、4 PHASE BITS |
| 2 | 2 | 0～0.85 | 0.85～1.0 |
| 3 | 3 | 0～0.80 | 0.80～1.0 |
| 4 | 4 | 0～0.75 | 0.75～1.0 |
| 6 | 6 | 0～0.65 | 0.65～1.0 |

FIG. 10

EP 1 865 619 A1

400:RECEIVING APPARATUS

101-1
102-1 RF RECEIVING SECTION
101-N
102-N RF RECEIVING SECTION

107 MIMO DEMODULATING SECTION

103 CHANNEL ESTIMATING SECTION

104 CORRELATION DETECTING SECTION

401 RESOLUTION DECIDING SECTION → INDICATOR OF RESOLUTION

402 FEEDBACK INFORMATION GENERATING SECTION → FEEDBACK INFORMATION

108-1 DECODING SECTION → RECEIVED DATA SEQUENCE 1
108-2 DECODING SECTION → RECEIVED DATA SEQUENCE 2

FIG. 11

Im

DIFFERENTIAL
INFORMATION

100

101

111
110
010
011

001

000

00100
00101
00111
00110
00010
00011
00001
00000
10000
10001

Re

REFERENCE
INFORMATION

FIG. 12

| 1 | 1 | 0 | 0 | 0 | 0 | 1 | 0 |

3 AMPLITUDE     5 PHASE
    BITS              BITS

FIG. 13

| <div align="center">**INTERNATIONAL SEARCH REPORT**</div> | International application No. |
|---|---|
| | PCT/JP2006/308689 |

| A. CLASSIFICATION OF SUBJECT MATTER |
|---|
| *H04B7/06*(2006.01), *H04B1/707*(2006.01), *H04B7/04*(2006.01), *H04J15/00* (2006.01) |
| According to International Patent Classification (IPC) or to both national classification and IPC |

| B. FIELDS SEARCHED |
|---|
| Minimum documentation searched (classification system followed by classification symbols) <br> H04B7/06, H04B1/707, H04B7/04, H04J15/00 |
| Documentation searched other than minimum documentation to the extent that such documents are included in the fields searched <br> Jitsuyo Shinan Koho            1922-1996   Jitsuyo Shinan Toroku Koho    1996-2006 <br> Kokai Jitsuyo Shinan Koho      1971-2006   Toroku Jitsuyo Shinan Koho    1994-2006 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X <br> A | WO 2002/015433 A1  (Fujitsu Ltd.), <br> 21 February, 2002 (21.02.02), <br> Pages 13 to 16; all drawings <br> & EP 1315311 A1 | 1,2,7-9 <br> 3-6 |
| X <br> A | WO 2003/026335 A1  (Fujitsu Ltd.), <br> 27 March, 2003 (27.03.03), <br> Pages 7 to 8; Fig. 1 <br> (Family: none) | 1,2,7-9 <br> 3-6 |
| A | JP 2005-509316 A  (Motorola, Inc.), <br> 07 April, 2005 (07.04.05), <br> Full text; all drawings <br> & WO 2002/082689 A2      & US 2003/0185309 A1 | 1-9 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br> 11 July, 2006 (11.07.06) | Date of mailing of the international search report <br> 25 July, 2006 (25.07.06) |
|---|---|
| Name and mailing address of the ISA/ <br> Japanese Patent Office <br><br> Facsimile No. | Authorized officer <br><br><br> Telephone No. |

Form PCT/ISA/210 (second sheet) (April 2005)

**INTERNATIONAL SEARCH REPORT**

| International application No. |
| --- |
| PCT/JP2006/308689 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-500977 A  (Nokia Networks Oy.),<br>07 January, 2003 (07.01.03),<br>Full text; all drawings<br>& WO 2000/072465 A1      & EP 1097525 A1 | 1-9 |

Form PCT/ISA/210 (continuation of second sheet) (April 2005)

**EP 1 865 619 A1**

**REFERENCES CITED IN THE DESCRIPTION**

**Patent documents cited in the description**

- JP 2001237751 A

- JP 2005132059 A